Europäisches Patentamt

European Patent Office

Office européen des brevets

(11) Veröffentlichungsnummer: **0 222 196**
**A2**

## (12) EUROPÄISCHE PATENTANMELDUNG

(21) Anmeldenummer: 86114300.6

(22) Anmeldetag: 16.10.86

(51) Int. Cl.⁴ **C22B 43/00**

(30) Priorität: 05.11.85 DE 3539163

(43) Veröffentlichungstag der Anmeldung:
20.05.87 Patentblatt 87/21

(84) Benannte Vertragsstaaten:
AT BE CH DE FR GB IT LI NL

(71) Anmelder: **HOECHST AKTIENGESELLSCHAFT**
**Postfach 80 03 20**
**D-6230 Frankfurt am Main 80(DE)**

(72) Erfinder: **Ulrich, Hannsjörg, Dr.**
**Von-Bodelschwingh-Weg 47**
**D-5042 Erftstadt(DE)**
Erfinder: **Gassen, Achim**
**Am Sonnenhang 33**
**D-5030 Hürth(DE)**

(54) **Verfahren und Anlage zur Trennung von Quecksilber und rotem Phosphor.**

(57) Bei einem Verfahren zur Trennung eines Gemisches von Quecksilber und rotem Phosphor, welches durch Hindurchführen einer ein Quecksilbersalz gelöst enthaltenden wäßrigen Lösung durch eine Schüttung von körnigem rotem Phosphor erhalten wurde, befindet sich der rote Phosphor in einer vertikal angeordneten Säule. Die Säule weist nahe ihrem unteren Ende eine Stützplatte auf, auf der die Schüttung aus rotem Phosphor ruht. Durch die Stützplatte preßt man von unten her während 5 bis 30 Minuten ein Fluidat unter Anhebung des Sollstörstellen aufweisenden und mit Lösung überschichteten Gemisches aus Quecksilber und der Schüttung aus rotem Phosphor. Das aus der angehobenen Schüttung abtropfende Quecksilber läßt man sich innerhalb von 5 bis 30 Minuten auf der Stützplatte sammeln. Man preßt während 1 bis 20 Sekunden ein Fluidat von oben her auf die Schüttung. Schließlich sammelt man das durch die Stützplatte ablaufende Quecksilber.

Bei einer Anlage zur Durchführung dieses Verfahrens weist die vertikal angeordnete Säule (1) im Bereich der Schüttung (3) von rotem Phosphor Sollstörstellen auf, und die Stützplatte ist eine Lochscheibe (2) mit Öffnungen von 25 bis 100 μm. Am unteren Ende der Säule (1) ist ein Quecksilbersammelbehälter (6) dichtschließend befestigt. Die Säule (1) ist über ihr oberes und unteres Ende mit einem mit Aktiv-Kohle (27) gefüllten, vertikal angeordneten Rohr (25) verbunden. Schließlich ist die Säule (1) unterhalb der Lochscheibe (2) von einem Flüssigkeitsablaufrohr (9) durchdrungen ist, welches mit einer in beiden Drehrichtungen betreibbaren Pumpe (22) strömungsmäßig verbunden ist.

## Verfahren und Anlage zur Trennung von Quecksilber und rotem Phosphor

Die vorliegende Erfindung betrifft ein Verfahren zur Trennung eines Gemisches von Quecksilber und rotem Phosphor, welches durch Hindurchführen einer mindestens ein Quecksilbersalz gelöst enthaltenden wäßrigen Lösung durch eine Schüttung von körnigem rotem Phosphor erhalten wurde, wobei sich der rote Phosphor in einer vertikal angeordneten Säule befindet, welche nahe ihrem unteren Ende eine Stützplatte aufweist, auf der die Schüttung aus rotem Phosphor ruht sowie eine Anlage zu seiner Durchführung.

Aus der EP-PS 0 052 253 ist ein Verfahren zur Abtrennung von u. a. Halbedelmetallen, beispielsweise Quecksilber, aus den wäßrigen Lösungen ihrer Salze bekannt, bei welchem diese wäßrigen Lösungen durch eine Zone geführt werden, in der sich eine Schüttung von rotem Phosphor mit Korngrößen bis zu 10 mm befindet. Wenn es mit diesem Verfahren auch gelingt, Quecksilber aus hochverdünnten Lösungen abzuscheiden und als Metall anzureichern, so stellt die Trennung des Gemisches aus Quecksilber und rotem Phosphor ein Problem dar.

Es ist bisher versucht worden, das Gemisch aus Quecksilber und rotem Phosphor dadurch zu trennen, daß man es einer Destillation im Vakuum unterwirft. Abgesehen davon, daß dazu eine aufwendige Destillationseinrichtung erforderlich ist, ist dabei von Nachteil, daß die Trennung durch die teilweise erfolgende Umwandlung von rotem Phosphor in gelben Phosphor gestört wird.

Daher ist es Aufgabe der vorliegenden Erfindung, ein Verfahren zur Trennung eines Gemisches aus Quecksilber und rotem Phosphor sowie eine Anlage zu seiner Durchführung anzugeben, bei welchen das Gemisch während seiner Trennung in der zur Abscheidung des Quecksilbers aus den wäßrigen Lösungen seiner Salze dienenden Säule verbleibt und bei welchen der vom Quecksilber befreite rote Phosphor erneut zur Abscheidung von Quecksilber aus den wäßrigen Lösungen seiner Salze dienen kann. Das wird erfindungsgemäß dadurch erreicht, daß man von unten her durch die Stützplatte ein Fluidat unter Anhebung des Sollstörstellen aufweisenden und mit Lösung überschichteten Gemisches aus Quecksilber und der Schüttung aus rotem Phosphor während 5 bis 30 Minuten hindurchpreßt; daß man das aus der angehobenen Schüttung abtropfende Quecksilber sich innerhalb von 5 bis 30 Minuten auf der Stützplatte sammeln läßt; daß man während 1 bis 20 Sekunden ein Fluidat von oben her auf die Schüttung preßt; und daß man schließlich das durch die Stützplatte ablaufende Quecksilber sammelt.

Das Verfahren gemäß der Erfindung kann weiterhin wahlweise auch dadurch ausgestaltet sein, daß

a) man das Fluidat mit einem Druck von 1,05 bis 1,5 bar von unten her durch die Stützplatte hindurchpreßt;

b) man das Fluidat mit einem Druck von 1,05 bis 2,0 bar von oben her auf die Schüttung preßt;

c) als Fluidate nichtreaktive Gase dienen;

d) als Fluidat Wasser dient;

e) als Fluidate mindestens teilweise entquickte wäßrige Lösungen dienen.

Eine Anlage zur Durchführung des erfindungsgemäßen Verfahrens, welche aus einer vertikal angeordneten Säule besteht, die nahe ihrem unteren Ende eine horizontal verlaufende Stützplatte aufweist, auf welcher eine Schüttung aus körnigem rotem Phosphor ruht, kann dadurch gekennzeichnet sein, daß die Säule im Bereich der Schüttung von rotem Phosphor Sollstörstellen aufweist; daß die Stützplatte eine Lochscheibe mit Öffnungen von 25 bis 100 $\mu$m ist; daß am unteren Ende der Säule ein Quecksilbersammelbehälter dichtschließend befestigt ist; daß die Säule an ihrem oberen Ende mit einer Einziehung mit Kopf verbunden ist; daß der Kopf von einem Flüssigkeitszuführungsrohr durchdrungen ist; daß das Flüssigkeitszuführungsrohr über eine dritte Rohrleitung und eine zweite Rohrleitung mit einem mit Aktiv-Kohle gefüllten, vertikal angeordneten Rohr verbunden ist; daß die Säule unterhalb der Lochscheibe von einem Flüssigkeitsablaufrohr durchdrungen ist, welches mit einer in beiden Drehrichtungen betreibbaren Pumpe strömungsmäßig verbunden ist; und daß von der Pumpe eine in das untere Ende des Rohres einmündende erste Rohrleitung abgeht.

Die Anlage gemäß der Erfindung kann wahlweise auch noch dadurch weitergebildet sein, daß

f) die Lochscheibe mit einem Filtertuch überspannt ist, dessen Porenweite etwa gleich den Öffnungen in der Lochscheibe ist;

g) die Sollstörstellen durch mehrere, an der Innenwand der Säule befestigte Strömungsbrecher gebildet sind;

h) die Sollstörstellen durch mehrere, in die Schüttung des roten Phosphors eingebrachte Füllkörper gebildet werden;

i) in den Kopf seitlich ein Druckgasrohr einmündet, welches über einen dritten Dreiwegehahn einerseits mit einem ersten Gaszuführungsrohr und andererseits mit einem zweiten Druckentlastungsrohr strömungsmäßig verbindbar ist;

j) die Säule unterhalb der Lochscheibe von einem ersten Druckentlastungsrohr mit zweitem Absperrhahn durchdrungen ist;

k) in dem Flüssigkeitsablaufrohr ein erster Dreiwegehahn angeordnet ist, welcher mit einem zweiten Gaszuführungsrohr verbunden ist;

l) das untere Ende des Rohres mit einem vierten Dreiwegehahn und das obere Ende des Rohres mit einem fünften Dreiwegehahn verbunden sind; und daß die Dreiwegehähne jeweils mit einer Bypassleitung verbunden sind.

Beim erfindungsgemäßen Verfahren können als nichtreaktive Gase Stickstoff, Kohlendioxid und gegebenenfalls Luft sowie deren Mischungen verwendet werden.

Beim Verfahren gemäß der Erfindung können als Fluidate auch Gemische von Wasser bzw. wäßrige Lösungen und von nichtreaktiven Gasen dienen.

Das beim erfindungsgemäßen Verfahren anfallende Quecksilber ist weitgehende sauber und der in der Säule verbleibende rote Phosphor kann unmittelbar zur Abscheidung von Quecksilber aus wäßrigen Lösungen seiner Salze wiederverwendet werden.

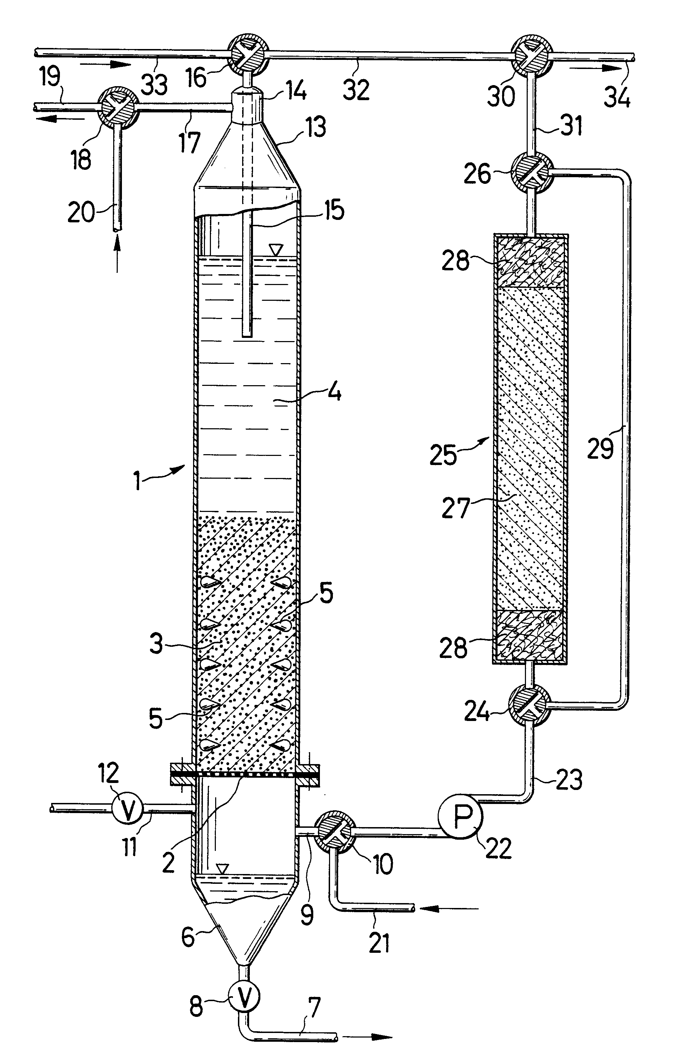

In der beigefügten Zeichnung ist eine Vorrichtung zur Durchführung des erfindungsgemäßen Verfahrens schematisch und im Schnitt dargestellt.

Eine Säule 1 weist in ihrem unteren Bereich eine Lochscheibe 2 auf, welche vorteilhafterweise mit einem Filtertuch gleicher Porenweite überspannt ist. Auf der Lochscheibe 2 ruht eine Schüttung 3 aus rotem Phosphor, während die Säule 1 oberhalb der Schüttung 3 mit quecksilberhaltiger Lösung 4 gefüllt ist. Im Bereich der Schüttung 3 sind an der Innenwand der Säule 1 mit Abstand übereinander mehrere Strömungsbrecher 5 als Sollstörstellen befestigt, wobei vorteilhafterweise jeweils drei Strömungsbrecher in einer horizontalen Ebene angeordnet sind. Am unteren Ende der Säule 1 ist ein konisch eingezogener Quecksilbersammelbehälter 6 angebracht, welcher ein Ablaufrohr 7 aufweist. Im Ablaufrohr 7 befindet sich ein erster Absperrhahn 8. Die Säule 1 ist in ihrem Bereich unterhalb der Lochscheibe 2 von einem Flüssigkeitsablaufrohr 9 durchdrungen, welches mit einem ersten Dreiwegehahn 10 verbunden ist, und von einem ersten Druckentlastungsrohr 11 durchdrungen, welches einen zweiten Absperrhahn 12 aufweist. Schließlich weist die Säule 1 an ihrem oberen Ende eine Einziehung 13 auf, welche einen Kopf 14 trägt. Der Kopf 14 ist von einem Flüssigkeitszuführungsrohr 15 durchdrungen, welches mit einem zweiten Dreiwegehahn verbunden ist. In den Kopf 14 mündet weiterhin ein Druckgasrohr 17 ein, welches mit einem dritten Dreiwegehahn 18 verbunden ist, der seinerseits mit einem zweiten Druckentlastungsrohr 19 und mit einem ersten Gaszuführungsrohr 20 verbunden ist.

Der erste Dreiwegehahn 10 ist weiterhin mit einem zweiten Gaszuführungsrohr 21 und mit einer in bezug auf ihre Strömungsrichtung umschaltbaren Pumpe 22 verbunden. Die Pumpe 22 steht über eine erste Rohrleitung 23 mit einem vierten Dreiwegehahn 24 in Verbindung.

Ein Rohr 25, welches mit dem vierten Dreiwegehahn 24 und einem fünften Dreiwegehahn 26 verbunden ist, ist mit einer Aktivkohle-Schicht 27 gefüllt, wobei sich oberhalb und unterhalb der Aktivkohle-Schicht 27 je eine Wattepfropfen 28 befindet. Weiterhin sind der vierte Dreiwegehahn 24 und der fünfte Dreiwegehahn 26 durch eine Bypassleitung 29 verbunden.

Der fünfte Dreiwegehahn 26 und ein sechster Dreiwegehahn 30 sind durch eine zweite Rohrleitung 31 miteinander verbunden, während der sechste Dreiwegehahn 30 weiterhin durch eine dritte Rohrleitung 32 mit dem zweiten Dreiwegehahn 16 verbunden ist.

Schließlich sind der zweite Dreiwegehahn 16 mit einer Zulaufleitung 33 für quecksilberhaltige Lösung und der sechste Dreiwegehahn 30 mit einer Ablaufleitung 34 verbunden.

In den folgenden Beispielen wird die mit dem erfindungsgemäßen Verfahren erzielte Trennung des Gemisches von Quecksilber und rotem Phosphor erläutert.

Beispiel 1 (gemäß der Erfindung)

Die in der Figur dargestellte Säule 1 - (Durchmesser: 50 mm, Höhe 800 mm; jeweils 3 Stromstörer 5 in einer Ebene, insgesamt 15 Stromstörer, Abstand der Ebenen voneinander: 45 mm) wurde mit soviel körnigem rotem Phosphor - (Siebfraktion: 250 bis 500 $\mu$m) gefüllt, daß sich die oberste Ebene der Stromstörer 5 etwa 5 cm unterhalb der Phosphorobergrenze befand.

Nun wurde solange wäßrige $HgCl_2$-Lösung über die Zulaufleitung 33, den zweiten Dreiwegehahn 16 und das Flüssigkeitszuführungsrohr 15 durch die Säule 1 hindurchgeleitet, bis die Schüttung 3 aus rotem Phosphor 50,4 g Quecksilber enthielt, welches in Form kleiner Tröpfchen an verschiedenen Stellen koaguliert war. Dann wurde über das zweite Gaszuführungsrohr 21 und den ersten Dreiwegehahn 10 Stickstoff mit einem Druck von 1,35 bar von unten her durch die Schüttung 3 von rotem Phosphor, an deren Oberseite sich noch eine etwa 4 cm hohe Lösungsschicht befand, hindurchgedrückt. Dabei wurde die gesamte Schüttung 3 in der Säule 1 um etwa 1 bis 2 cm angehoben, wodurch an den Strömungsbrechern 5 die Schüttung 3 wiederholt von unten nach oben fortschreitend auseinandergerissen wurde. In den Rißstellen sammelte sich augenblicklich das elementare Quecksilber, welches sich wegen seines hohen spezifischen Gewichtes nach etwa 15 Minuten auf der Oberseite der Lochscheibe 2 befand. Nach Abstellen des Stickstoffes tropften die kleinsten Quecksilber-Perlen durch die Lochscheibe 2 in den Quecksilbersammelbehälter 6. Nach Aufgeben von Stickstoff mit einem Druck von 1,6 bar über das erste Gaszuführungsrohr 20, das Druckgasrohr 17 und das Flüssigkeitszuführungsrohr 15 auf die Oberseite der Schüttung 3 wurde das noch auf der Lochscheibe 2 befindliche Quecksilber in den Quecksilbersammelbehälter 6 gepreßt, wobei ein Stickstoff-Stoßdruck von 5 Sekunden ausreichend war.

Im Quecksilbersammelbehälter 6 befanden sich - schließlich 34,2 g Quecksilber, d. h. 67,8 % der auf der Schüttung 3 aus rotem Phosphor abgeschiedenen Quecksilbermenge.

Beispiel 2 (gemäß der Erfindung)

Es wurde die gleiche Apparatur wie in Beispiel 1 verwendet.

Auf der Schüttung 3 aus rotem Phosphor befanden sich 90,8 g Quecksilber.

Die in der Säule 1 befindliche Lösung 4 wurde über das Flüssigkeitszuführungsrohr 15, die dritte Rohrleitung 32, die zweite Rohrleitung 31, das Rohr 25, die erste Rohrleitung 23, die Pumpe 22 und das Flüssigkeitsablaufrohr 9 von unten her durch die Lochscheibe 2 gedrückt, wobei zunächst ein Luftpolster durch den roten Phosphor gepreßt wurde. Durch das Anheben der Gesamten Schüttung 3 wurde diese an verschiedenen Stellen auseinandergerissen, wobei sich in den Rißstellen augenblicklich elementares Quecksilber sammelte. Nun wurde die Lösung für weitere 15 Minuten im Kreislauf gepumpt, wobei zur Entlastung des mit Aktivkohle gefüllten Rohres 25 über die Bypassleitung 29 gefahren wurde. Während dieser Zeit blieb der rote Phosphor in leicht bewegter Schwebe, während sich das Quecksilber auf der Lochscheibe 2 absetzte. Nachdem der Lösungskreislauf durch Umschalten der Pumpe 22 in entgegengesetzte Strömungsrichtung gebracht worden war, trat das Quecksilber nahezu momentan durch die Lochscheibe 2 hindurch und fiel in den Quecksilberbehälter 6.

Im Quecksilbersammelbehälter 6 befanden sich 67,8 g Quecksilber, d. h. 74,7 % der auf der Schüttung 3 aus rotem Phosphor abgeschiedenen Quecksilbermenge.

Beispiel 3 (gemäß der Erfindung)

Beispiel 2 wurde mit der Änderung wiederholt, daß anstelle der im Kreislauf geführten Lösung von oben auf die Schüttung 3 aus rotem Phosphor mit Preßluft von 1,2 bar gedrückt wurde.

Im Quecksilbersammelbehälter 6 befanden sich 67,5 g Quecksilber, d. h. 74,3 % der auf der Schüttung 3 abgeschiedenen Quecksilbermenge.

Beispiel 4 (gemäß der Erfindung)

Beispiel 2 wurde mit den Änderungen wiederholt, daß während des Kreislaufpumpens der Lösung von unten her durch den roten Phosphor der Lösung in gleichen Zeitabständen dreimal ein Stickstoff-Stoßdruck (Druck: 1,2 bar; Zeit: 8 Sekunden) zugespeist wurde und die Strömungsrichtung der Lösung bereits nach 10 Minuten umgekehrt wurde.

Ursprünglich befanden sich auf der Schüttung 3 aus rotem Phosphor 82,0 g Quecksilber, von denen 65,1 g, d. h. 79,4 % im Quecksilbersammelbehälter 6 zurückgewonnen wurden.

Beispiel 5 (gemäß der Erfindung)

Es wurde die Apparatur wie in Beispiel 1, jedoch mit der Abänderung verwendet, daß die Säule 1 keine Stromstörer 5 aufwies. Dafür bestand die Schüttung 3 aus einem Gemisch von rotem Phosphor und Glasringen (Durchmesser: 5 mm) im Volumenverhältnis 2 : 1, wobei sich auf dem roten Phosphor 100 g Quecksilber befanden.

Die Versuchsdurchführung erfolgte analog Beispiel 2.

Im Quecksilbersammelbehälter 6 befanden sich - schließlich 66 g Quecksilber.

Beispiel 6 (Vergleichsbeispiel)

Beispiel 5 wurde mit den Änderungen wiederholt, daß die Schüttung 3 nur aus rotem Phosphor ohne Glasringe bestand und daß das Kreislaufpumpen der Lösung von unten her durch den roten Phosphor 45 Minuten lang durchgeführt wurde. Auf der Schüttung 3 befanden sich 85,6 g Quecksilber.

Aus dem Quecksilbersammelbehälter 6 konnten schließlich 25,5 g Quecksilber, d. h. 29,8 % der auf der Schüttung 3 aus rotem Phosphor abgeschiedenen Quecksilbermenge entnommen werden.

## Ansprüche

1. Verfahren zur Trennung eines Gemisches von Quecksilber und rotem Phosphor, welches durch Hindurchführen einer mindestens ein Quecksilbersalz gelöst enthaltenden wäßrigen Lösung durch eine Schüttung von körnigem rotem Phosphor erhalten wurde, wobei sich der rote Phosphor in einer vertikal angeordneten Säule befindet, welche nahe ihrem unteren Ende eine Stützplatte aufweist, auf der die Schüttung aus rotem Phosphor ruht, dadurch gekennzeichnet, daß man von unten her durch die Stützplatte ein Fluidat unter Anhebung des Sollstörstellen aufweisenden und mit Lösung überschichteten Gemisches aus Quecksilber und der Schüttung aus rotem Phosphor während 5 bis 30 Minuten hindurchpreßt; daß man das aus der angehobenen Schüttung abtropfende Quecksilber sich innerhalb von 5 bis 30 Minuten auf der Stützplatte sammeln läßt; daß man während 1 bis 20 Sekunden ein Fluidat von oben her auf die Schüttung preßt; und daß man schließlich das durch die Stützplatte ablaufende Quecksilber sammelt.

2. Verfahren nach Anspruch 1, dadurch gekennzeichnet, daß man das Fluidat mit einem Druck von 1,05 bis 1,5 bar von unten her durch die Stützplatte hindurchpreßt.

3. Verfahren nach Anspruch 1 oder 2, dadurch gekennzeichnet, daß man das Fluidat mit einem Druck von 1,05 bis 2,0 bar von oben her auf die Schüttung preßt.

4. Verfahren nach einem der Ansprüche 1 bis 3, dadurch gekennzeichnet, daß als Fluidate nichtreaktive Gase dienen.

5. Verfahren nach einem der Ansprüche 1 bis 3, dadurch gekennzeichnet, daß als Fluidat Wasser dient.

6. Verfahren nach einem der Ansprüche 1 bis 3, dadurch gekennzeichnet, daß als Fluidate mindestens teilweise entquickte wäßrige Lösungen dienen.

7. Anlage zur Durchführung des Verfahrens nach den Ansprüchen 1 bis 6, bestehend aus einer vertikal angeordneten Säule, die nahe ihrem unteren Ende eine horizontal verlaufende Stützplatte aufweist, auf welcher eine Schüttung aus körnigem rotem Phosphor ruht, dadurch gekennzeichnet, daß die Säule (1) im Bereich der Schüttung (3) von rotem Phosphor Sollstörstellen aufweist; daß die Stützplatte eine Lochscheibe (2) mit Öffnungen von 25 bis 100 μm ist; daß am unteren Ende der Säule (1) ein Quecksilbersammelbehälter (6) dichtschließend befestigt ist; daß die Säule (1) an ihrem oberen Ende mit einer Einziehung (13) mit Kopf (14) verbunden ist; daß der Kopf (14) von einem Flüssigkeitszuführungsrohr (15) durchdrungen ist; daß das Flüssigkeitszuführungsrohr (15) über eine dritte Rohrleitung (32) und eine zweite Rohrleitung (31) mit einem mit Aktiv-Kohle (27) gefüllten, vertikal angeordneten Rohr (25) verbunden ist; daß die Säule (1) unterhalb der Lochscheibe (2) von einem Flüssigkeitsablaufrohr (9) durchdrungen ist, welches mit einer in beiden Drehrichtungen betreibbaren Pumpe (22) strömungsmäßig verbunden ist; und daß von der Pumpe (22) eine in das untere Ende des Rohres (25) einmündende erste Rohrleitung (23) abgeht.

8. Anlage nach Anspruch 7, dadurch gekennzeichnet, daß die Lochscheibe (2) mit einem Filtertuch überspannt ist, dessen Porenweite etwa gleich den Öffnungen in der Lochscheibe (2) ist.

9. Anlage nach Anspruch 7 oder 8, dadurch gekennzeichnet, daß die Sollstörstellen durch mehrere, an der Innenwand der Säule (1) befestigte Strömungsbrecher (5) gebildet sind.

10. Anlage nach Anspruch 7 oder 8, dadurch gekennzeichnet, daß die Sollstörstellen durch mehrere, in die Schüttung des roten Phosphors eingebrachte Füllkörper gebildet werden.

11. Anlage nach einem der Ansprüche 7 bis 10, dadurch gekennzeichnet, daß in den Kopf (14) seitlich ein Druckgasrohr (17) einmündet, welches über einen dritten Dreiwegehahn (18) einerseits mit einem ersten Gaszuführungsrohr (20) und andererseits mit einem zweiten Druckentlastungsrohr (19) strömungsmäßig verbindbar ist.

12. Anlage nach einem der Ansprüche 7 bis 11, dadurch gekennzeichnet, daß die Säule (1) unterhalb der Lochscheibe (2) von einem ersten Druckentlastungsrohr (11) mit zweitem Absperrhahn (12) durchdrungen ist.

13. Anlage nach einem der Ansprüche 7 bis 12, dadurch gekennzeichnet, daß in dem Flüssigkeitsablaufrohr (9) ein erster Dreiwegehahn (10) angeordnet ist, welcher mit einem zweiten Gaszuführungsrohr (21) verbunden ist.

14. Anlage nach einem der Ansprüche 7 bis 13, dadurch gekennzeichnet, daß das untere Ende des Rohres (25) mit einem vierten Dreiwegehahn (24) und das obere Ende des Rohres (25) mit einem fünften Dreiwegehahn (26) verbunden sind; und daß die Dreiwegehähne (24, 26) jeweils mit einer Bypassleitung (29) verbunden sind.